# EUROPEAN PATENT SPECIFICATION

(11) **EP 1 918 615 B1**
(45) Date of publication and mention of the grant of the patent: **03.10.2012**
(21) Application number: 07019824.7
(22) Date of filing: 10.10.2007
(51) Int. Cl.: F16H 59/10, G05G 5/06, F16H 59/08

(54) **Modular automatic transmission shifter**
Modulare automatische Getriebeschalthebelvorrichtung
Dispositif sélecteur de transmission automatique modulaire

(30) Priority: 31.10.2006 US 554953
(43) Date of publication of application: 07.05.2008
(73) Proprietor: Dura Global Technologies, Inc., Rochester Hills, Michigan 48309 (US)
(72) Inventor: Wang, Yong Qiang, Troy, Michigan 48085 (US)
(74) Representative: Coyle, Philip Aidan

(56) References cited:
- US-A- 5 195 387
- US-A- 5 207 124
- US-A- 5 582 073
- US-A- 5 722 292

## Description

### FIELD OF THE INVENTION

The present invention generally relates to shifter mechanisms for controlling transmissions of motor vehicles.

### BACKGROUND OF THE INVENTION

In a vehicle equipped with an automatic transmission, a shifter mechanism typically has a shifter lever pivotable over a gate forming a series of positions representative of desired automatic transmission gears such as, for example, park (P), reverse (R), neutral (N), drive (D), and low gear (M). The shifter mechanism is connected to the vehicle automatic transmission by a suitable mechanical and/or electronic operating linkage to effect actuation of the transmission to the selected gear when the shifter lever is pivoted to the transmission gear's representative position. The shifter mechanism is typically provided with a detent assembly which releasably holds the shifter lever mechanism in a desired position to prevent inadvertent movement to other positions but permit desired movement to other positions. The shifter mechanism also typically is provided with a secondary detent assembly to more positively prevent "crash-through" or accidental shifting. A BTSI (Brake-Transmission Shift Interlock) is also typically provided so that the driver cannot move the shifter lever out of the park position unless the vehicle brake is applied. A key interlock is also typically provided so that the ignition key cannot be pulled out from the key cylinder (the ignition key cannot be rotated from the "ACC" position to the "LOCK" position) if the shifter lever is not shifted to the park position. In addition, when the shifter lever is positioned in the park position, if the ignition key is rotated to a position other than the "LOCK" position and the brake for braking the vehicle is not operated, the shifter lever cannot be moved from the park position.

There are several different types of shifters including straight gate shifters where the shifter lever moves along a straight gate, tiptronic or auto stick shifters where in addition to moving the shifter lever along the gate, the transmission can be manually shifted up or down one gear by incrementally moving the shifter lever, and serpentine gate shifters where the shift lever moves along a serpentine shaped gate. There are a number of different types of transmission requiring upper or lower level connections with the shifter mechanism. As a result, there is a large number of different shifter mechanisms that are required for various vehicles. Each having its own tooling, manufacturing and validation costs.

Shift precision and feel of shifter mechanism are affected by many component and assembly tolerances. Thus many of the components must be manufactured to relatively high tolerances and assembled to relatively high tolerances. Each of which drives up the cost of the shifter mechanisms. There is a never ending desire in the motor vehicle industry to decrease cost while maintaining and/or increasing performance and/r features. Accordingly, there is a need in the art for an improved shifter mechanism. US-A-5722292 discloses a shift mechanism. US-A-5 195 387 discloses a shifter mechanism according to the pre-characterising portion of claim 1.

### SUMMARY OF THE INVENTION

The present invention provides a shifter mechanism as claimed in claim 1.

From the foregoing disclosure and the following more detailed description of various preferred embodiments it will be apparent to those skilled in the art that the present invention provides a significant advance in the technology and art of motor vehicle shifter mechanisms. Particularly significant in this regard is the potential the invention affords for providing a high quality, reliable, low cost assembly having improved preload capability. Additional features and advantages of various preferred embodiments will be better understood in view of the detailed description provided below.

### BRIEF DESCRIPTION OF THE DRAWINGS

These and further features of the present invention will be apparent with reference to the following description and drawings, wherein:
FIG. 1 is a diagrammatic perspective view of a shifter mechanism according to a preferred embodiment of the present invention, wherein the primary subassemblies/components are shown;
FIG. 2 is a perspective view of a shifter assembly of the shifter mechanism of FIG. 1;
FIG. 3 is a perspective view of a modular housing of the shifter assembly of FIG. 2;
FIG. 4 is a perspective view of a shifter yoke and a cable bracket of the shifter assembly of FIG. 2;
FIG. 5 is a perspective view of the shifter yoke of FIG. 4;
FIG. 6 is perspective view of the cable bracket of FIG. 4;
FIG. 7 is a top perspective view of a gate cover of the shifter assembly of FIG. 2;
FIG. 8 is a bottom perspective view of the gate cover of FIG. 7;
FIG. 9 is a perspective view of a tiptronic module of the gate cover of FIG. 7;
FIG. 10 is a perspective view of a park detect switch of the gate cover of FIG. 7;
FIG. 11 is a perspective view of a tiptronic lock lever of the gate cover of FIG. 7;
FIG. 12 is a bottom perspective view of an alternative gate cover;
FIG. 13 is a bottom perspective view of another alternative gate cover;
FIG. 14 is a diagrammatic perspective view of shifter assembly of FIG. 2;
FIG. 15 is a diagrammatic perspective view of an alternative shifter assembly wherein there is a lower level cable bracket;
FIG. 16 is a diagrammatic perspective view of another alternative shifter assembly wherein there is a straight gate; and
FIG. 17 is a diagrammatic perspective view of another alternative shifter assembly wherein there is a straight gate with a lower level cable bracket.

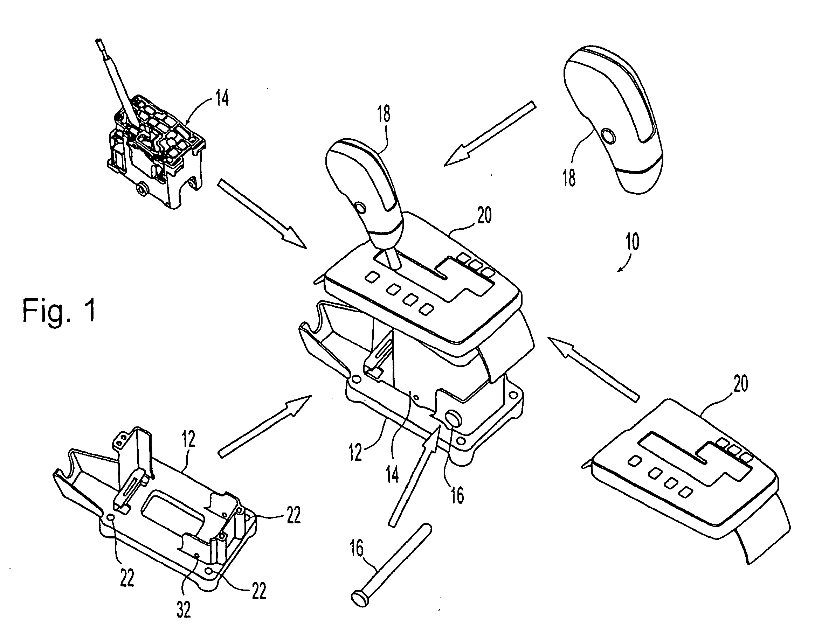

It should be understood that the appended drawings are not necessarily to scale, presenting a somewhat simplified representation of various preferred features illustrative of the basic principles of the invention. The specific design features of a shifter mechanism as disclosed herein, including, for example, specific dimensions, orientations, locations, and shapes of the various components, will be determined in part by the particular intended application and use environment. Certain features of the illustrated embodiments have been enlarged or distorted relative to others to facilitate visualization and clear understanding. In particular, thin features may be thickened, for example, for clarity or illustration. All references to direction and position, unless otherwise indicated, refer to the orientation of the shifter lever mechanism illustrated in the drawings. In general, up or upward generally refers to an upward direction in FIG. 1 and down or downward generally refers to a downward direction in FIG. 1. Also in general, fore or forward refers to a direction toward the front of the vehicle, that is, generally toward the left in FIG. 1 and aft or rearward refers to a direction toward the rear of the vehicle, that is, generally toward the right in FIG. 1.

### DETAILED DESCRIPTION OF CERTAIN PREFERRED EMBODIMENTS

The following detailed discussion of various alternative and preferred embodiments will illustrate the general principles of the invention with reference to a shifter lever mechanism for a motor vehicle such as an automobile, sport utility vehicle (SUV), cross over vehicle, truck, bus, or the like Other embodiments suitable for other applications will be apparent to those skilled in the art given the benefit of this disclosure.

Referring now to the drawings, FIG. 1 shows a shifter mechanism 10 according to a preferred embodiment of the present invention. The illustrated shifter mechanism 10 includes a shifter frame or base 12, a modular shifter or shifter lever assembly 14, a connecting pin 16 securing the modular shifter to the shifter base 12, a shifter knob 18 secured to the modular shifter 14 for grasping by the drive to shift the modular shifter 14, and a shifter bezel or cover 20 secured to the modular shifter 14 for providing desired appearance and styling within the vehicle environment.

The shifter base 12 is adapted to be attached to the motor vehicle in a fixed position such as a floor or console and can be formed of any suitable size and shape. The illustrated shifter base 12 is generally planar and shaped to engage the motor vehicle in a desired manner. The illustrated shifter base 12 is provided with an openings or holes 22 for receiving mechanical fasteners such as bolts or screws to secure the shifter base 12 to the motor vehicle. Other suitable shapes for the shifter base 12 and the attachment means 22 will be apparent to those skilled in the art. The shifter base 12 can be formed of any suitable material such as, for example, plastic and can be produced by any desirable method such as molding. Preferably, the base 12 is formed of unitary or one-piece construction but alternatively can be constructed of multiple components secured together.

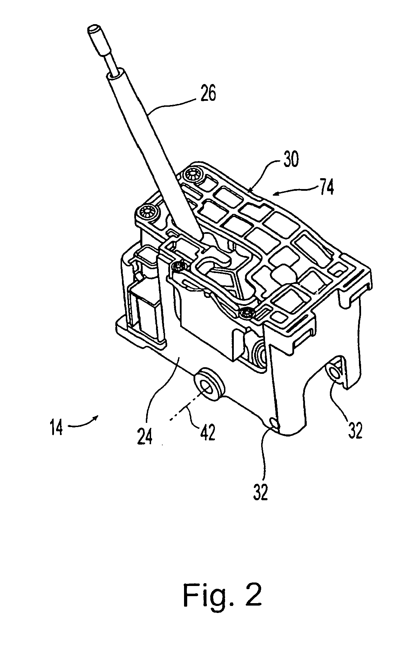

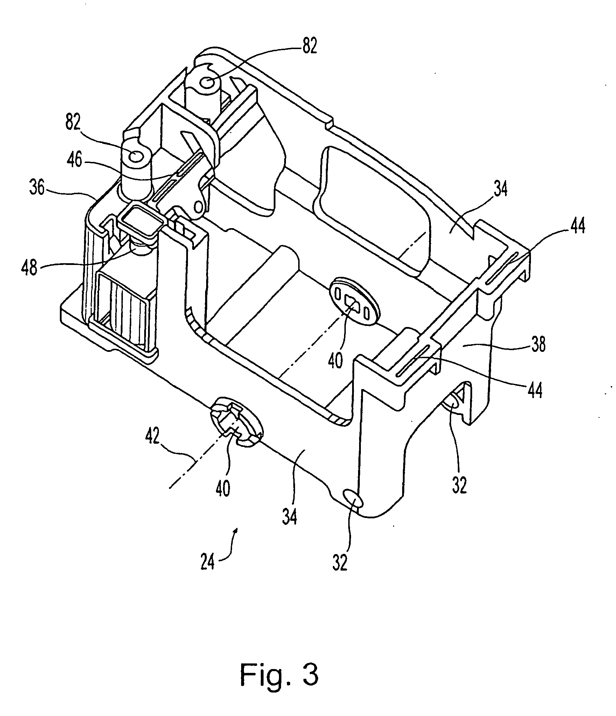

As best shown in FIG. 2, the illustrated modular shifter 14 includes a modular housing or shifter housing 24, a shifter yoke assembly 26, a cable bracket 28, and a shifter gate assembly 30. As best shown in FIG. 3, the illustrated shifter housing 24 is adapted to be secured to the shifter base 12. Openings 32 are provided in both the shifter base 12 and the shifter housing 24 for receiving the connecting pin 16 therein to secure the modular housing 24 to the shifter base 12. It is noted that the modular housing 24 can be alternatively secured to the shifter base 12 in any other suitable manner.

The illustrated modular housing 24 has a pair of laterally spaced apart side walls 34, a front wall 36 connecting a forward end of the side walls 34, and a rear wall 38 connecting a rearward end of the side walls 34. The side walls 34 are laterally spaced apart and are provided with coaxial openings 40 for pivotably mounting the shifter yoke assembly 26 therebetween as described in more detail hereinafter. The flange openings define a horizontal and laterally extending pivot axis 42 for the shifter yoke assembly 26. The illustrated front and rear walls 36, 38 are provided with openings 44 for securing the shifter cover 20 to the modular housing 24. It is noted that any other suitable means for securing the shifter cover 20 can alternatively be utilized. The illustrate front wall 36 is also adapted for supporting a brake and transmission interlock (BTSI) lever 46 and a park detect switch 48. The BTSI lever 46 and the park detect switch 48 can be of any suitable type. The modular housing 24 can be formed of any suitable material such as, for example, plastic and can be produced by any desirable method such as molding. Preferably, the modular housing is formed of unitary or one-piece construction but alternatively can be constructed of multiple components secured together.

As best shown in FIGS, 4 and 5, the illustrated shifter yoke assembly 26 includes a shifter yoke 50 and a shifter post or lever 52 upwardly extending from the shifter yoke 50 for manually moving the shifter yoke 50 to change the gear of the transmission. The lower end of the shifter yoke 50 is sized and shaped to extend between the side walls 34 of the modular housing 24. A horizontal, laterally extending main or primary pivot pin 54 cooperates with the coaxial openings 40 to provide a pivotable connection between the shifter yoke 50 and the modular housing 24. Pivotably connected in this manner, the shifter yoke 50 is pivotable relative to the modular housing 24 about the laterally extending pivot axis 42. The illustrated shifter yoke 50 is also provided with a secondary pivot pin 56 so that the shifter yoke is pivotable relative to the modular housing 24 about a second pivot axis 58 that is perpendicular to the lateral pivot axis 42 and enables the tiptronic features of the shifter mechanism 10. The shifter yoke 50 can be formed of any suitable material such as, for example, plastic and can be produced by any desirable method such as molding. Preferably, the shifter yoke 50 is formed of unitary or one-piece construction but alternatively can be constructed of multiple components secured together.

The illustrated shifter lever 52 is generally an elongate tube having a central axis 60 and forming a hollow central passage extending along the central axis 60. The lower end of the shifter lever 52 is adapted to extend into an opening in the shifter yoke 50. The shifter lever 52 can be rigidly secured to the shifter yoke 50 in any suitable manner such as, for example, snap-connectors, welding, adhesives, or mechanical fasteners or the shifter lever 46 can be formed unitary, that is as one piece, with the shifter yoke 50. With the shifter lever 52 rigidly secured to shifter yoke 50, the shifter yoke 50 can be selectively pivoted about the pivot axis 42 by manually applying a forward or rearward force to the shifter lever 52.

The illustrated yoke assembly is adapted to interact with both a gate or gate profile 62 and a secondary detent 64 of the shifter gate 30. A pawl or gate pin 66 is movable into and out of engagement with the gate profile 62 to lock and unlock the shifter yoke 50 against pivotable movement relative to the modular housing 24. An actuator or actuator rod 68 selectively moves the pawl 66 into and out of engagement with the gate profile 62. The illustrated pawl 66 is carried by the actuator rod 68 which extends within the shifter lever 52. The pawl and actuator rod 68 are spring biased to an upward position wherein the pawl 66 interacts or engages the gate profile 62. The illustrated shifter knob 18 is provided with a actuator button 70 which when pushed, downwardly pushes the actuation rod 68 and the pawl 66 against the spring bias to disengage the pawl 66 from the gate profile 62 so that the yoke assembly 26 is free to pivot about the laterally extending pivot axis 42.

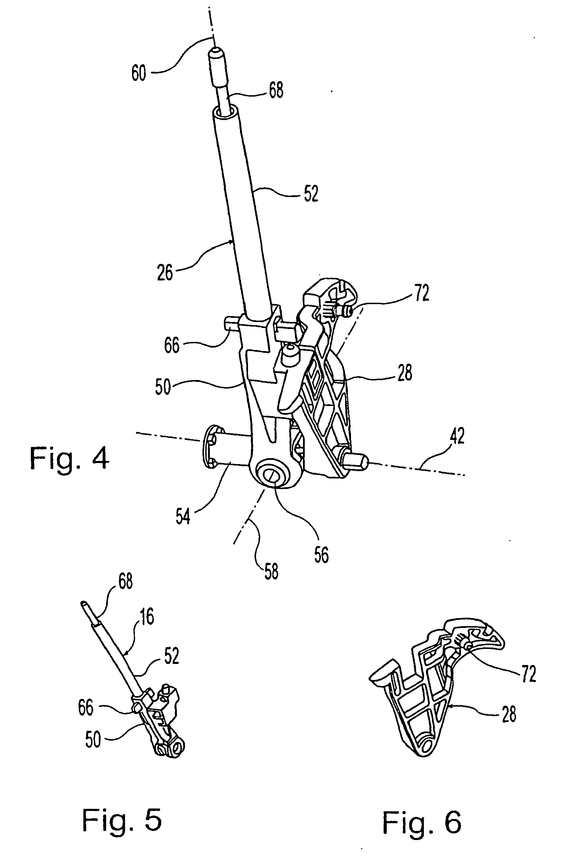

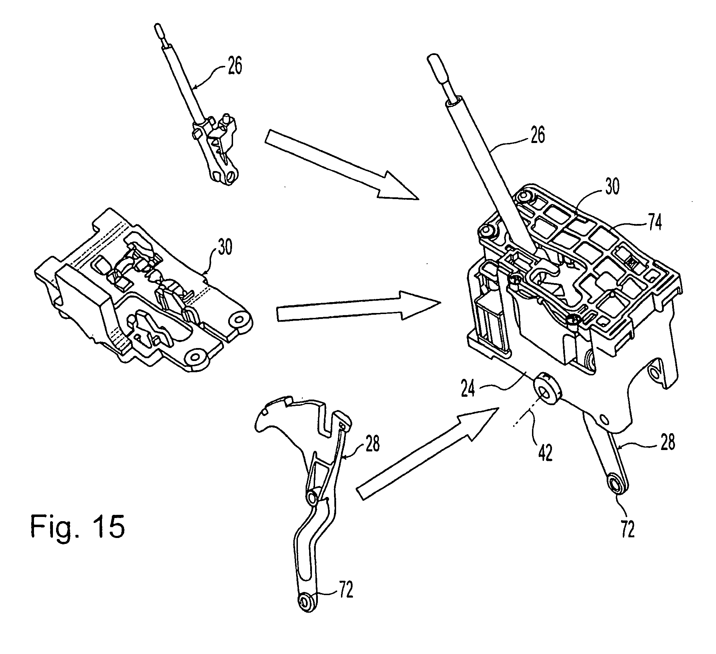

As best shown in FIGS. 4 and 6, the illustrated cable bracket 28 is adapted to be secured to the shifter yoke 50 for pivotable motion therewith. The cable bracket is provided with cable stud or grommet 72 so that a cable can be attached to interconnect the shifter mechanism 10 with the transmission. The illustrated cable bracket 28 is configured for an upper level connection but can alternatively be configured for other types of connections such as, for example, a lower level connection (see FIG. 15). The cable bracket 28 can be formed of any suitable material such as, for example, plastic and can be produced by any desirable method such as molding. Preferably, the cable bracket 28 is formed of unitary or one-piece construction but alternatively can be constructed of multiple components secured together.

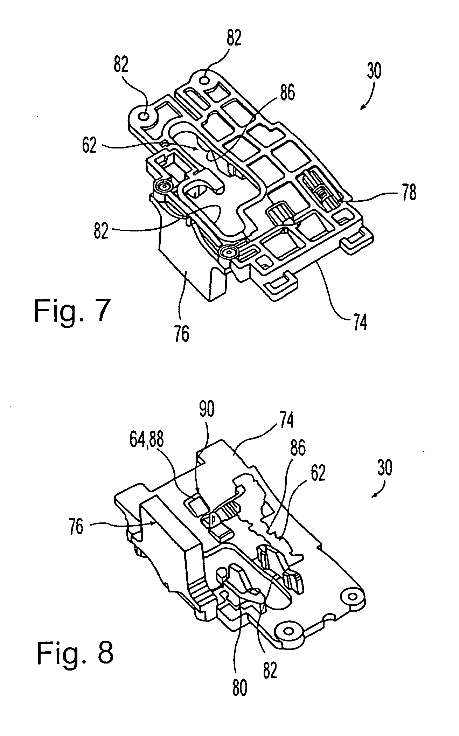

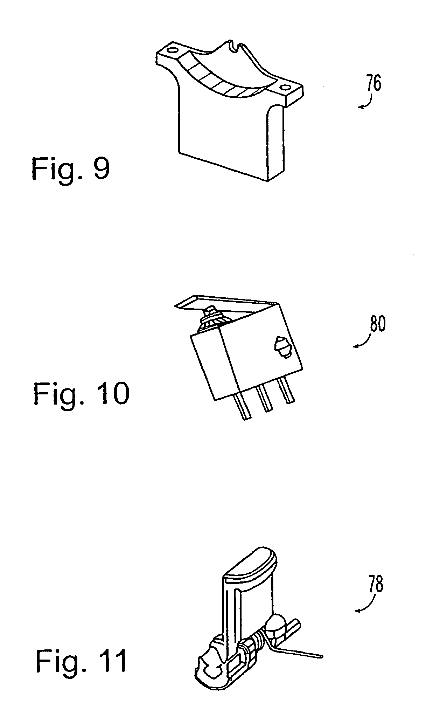

As best shown in FIGS. 7 to 11, the illustrated shifter gate assembly 30 includes a gate cover 74, a tiptronic module 76, a tipronic lock lever 78, and a park detect switch 80. The illustrated gate cover 74 is adapted to be secured to the top of modular housing 24. Openings 82 are provided in both the gate cover 74 and the shifter housing 24 for receiving the mechanical fasteners therein to secure the gate cover 74 to the modular housing 24. It is noted that the gate cover 74 can be alternatively secured to the modular housing 24 in any other suitable manner. The gate cover can be formed of any suitable material such as, for example, plastic and can be produced by any desirable method such as molding. Gate cover 74 is formed of unitary or one-piece construction and separate from the modular housing 24.

The gate cover 74 is provided with a slot 84 therein which defines the shift path for the shifter lever 52. The slot 84 can have any suitable shape depending on the desired shift path. The gate profile 62 is formed on the bottom of the gate cover 74 adjacent the slot 84. The illustrated gate profile 62 is a contoured surface formed by a plurality of downward facing grooves or notches 86 formed therein. The grooves 86 correspond with various gear positions along the shift path in which the shifter lever 52 can be shifted to provide a desired gear at the transmission of the motor vehicle. The grooves 86 can indicate positions such as park (P), reverse (R), neutral (N), drive (D), and low gear (M). The shifter lever 50 is suitably connected through the cable bracket 28 to the transmission of the motor vehicle such that movement the shifter lever 50 to the various positions causes the transmission to move to the corresponding gear. It is noted that the grooves 86 can have suitable shapes such as, for example, a rectangular or square shape and can each be shaped differently from one another or the same if desired. It is also noted that the contoured surface of the gate profile 62 can alternatively be formed in other manners such as, for example, spaced apart protrusions and/or can alternatively have any desired shape and size.

The illustrated gate cover 74 also has a secondary detent profile 88 formed on the bottom thereof for cooperating with a secondary detent 90 to selectively lock the shifter lever 50 in a desired one of the gear positions. The secondary detent 90 can be of any suitable type. The gate cover 74 is adapted for securing the tiptronic module 76 thereto so that the tiptronic module can interact with the yoke assembly 26 to detect when the shifter lever 52 is laterally pivoted about the second pivot axis 58 and send a suitable control signal to the transmission. The tiptronic module 76 can be of any suitable type. The gate cover 74 is also adapted for securing the tipronic lock lever 78 thereto so that the lock lever 78 can selectively lock the shifter lever 52 against lateral pivoting motion when desired. The tiptronic lock lever 78 can be of any suitable type. See U.S. Pat. Nos. 5,070,740 and 5,791,197 for examples of A/S shifting systems, the disclosures of which are expressly incorporated herein in their entireties. The gate cover 74 is further adapted for securing the park detect switch 80 thereto to detect when the shifter lever 52 is in the park position (or out of the park position) and provide a suitable control signal to the electronic control unit. The park detect switch 80 can be of any suitable type.

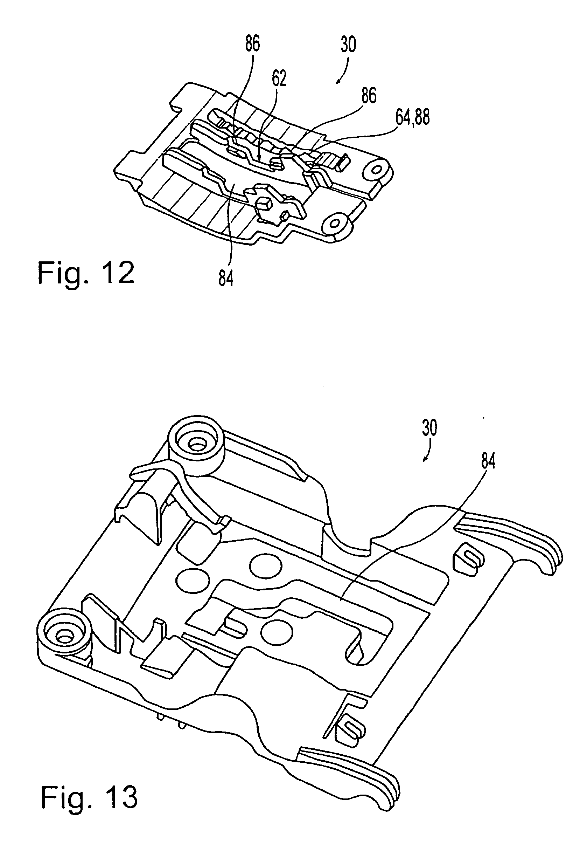

As best shown in Figures 12 and 13, the gate cover 74 of the gate assembly 30 can have other suitable configurations. FIG. 12 illustrates that the slot 84 can form a straight shift path. FIG. 13 illustrates that the slot 84 can form a serpentine shift path.

As best shown in FIG. 1, shifter lever knob or handle 18 is secured to the upper end of the shifter lever 50. The knob 18 is preferably provided with a shape to provide a suitable gripping surface for the hand of the operator.

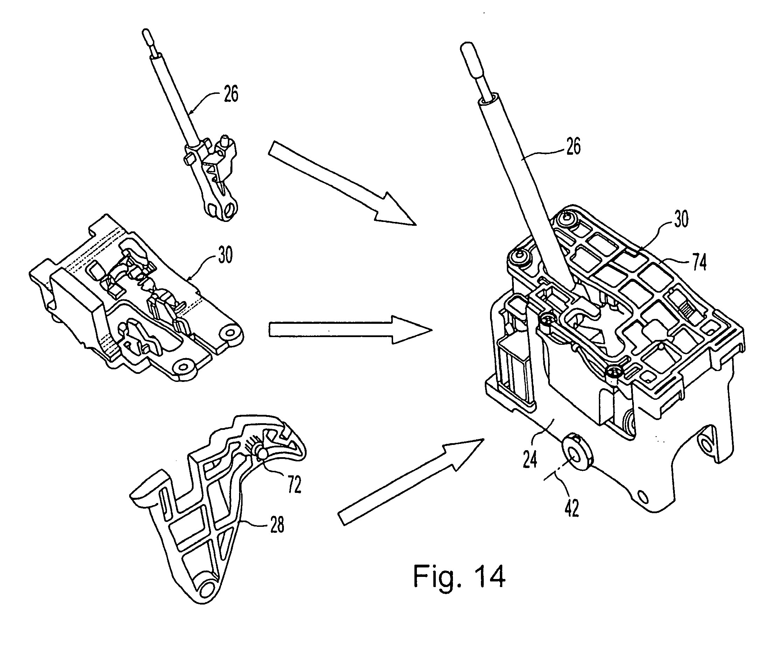

FIGS. 14 to 17 show that by utilizing the modular components of the present invention a variety of different shifter mechanisms can be provided by changing only one or two components. FIG. 14 shows a the shifter mechanism 10 having the gate cover 74 with a slot 18 formed for tiptronic shifter and a cable bracket 28 formed for an upper level connection.

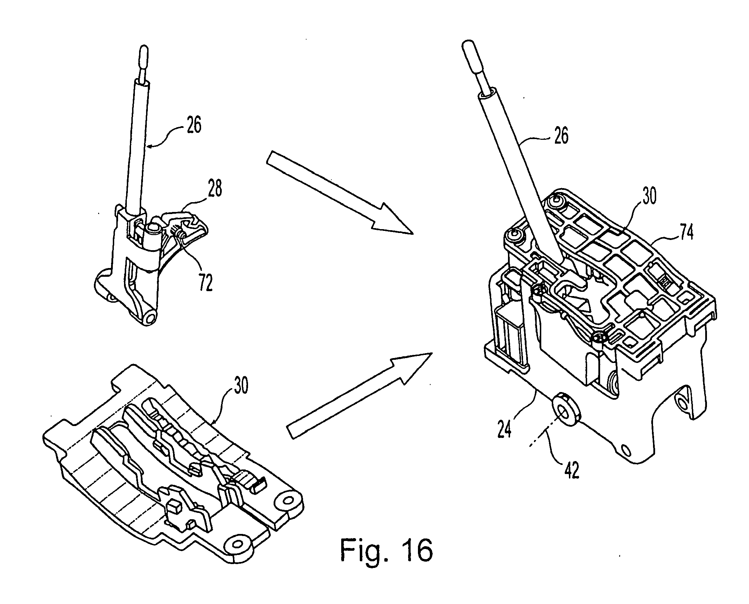

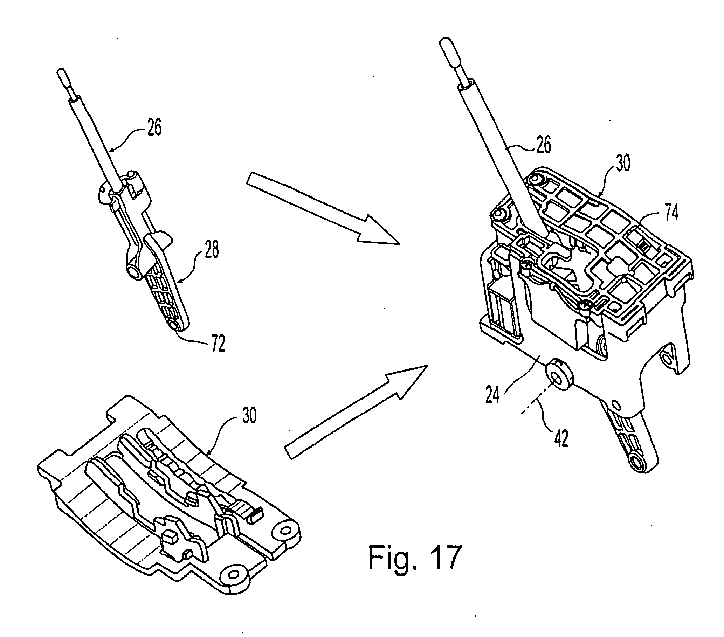

FIG. 15 shows the shifter mechanism 10 of FIG. 14 but with a cable bracket 28 formed for a lower level connection. Thus, because the cable bracket 28 is a unitary separate component from the remainder of the yoke assembly 26, the shifter mechanism 10 can be used for a different shifter mechanism simply by using a different cable bracket 28. FIG. 16 shows the shifter mechanism 10 of FIG. 14 but with a gate cover 74 with a slot 84 for a straight shifter. Thus, because the functional components are provided on the gate cover 74, the shifter mechanism can become a variety of different types of shifters simply by changing the gate cover 74. FIG. 17 shows the shifter mechanism 10 of FIG. 16 but with a cable bracket 28 formed for a lower level connection. Again, because the cable bracket 28 is a unitary separate component from the remainder of the yoke assembly 26, the shifter mechanism 10 can be used for a different shifter mechanism simply by using a different cable bracket 28.

It is apparent from the above detailed description of preferred embodiments of the present invention, that several critical features are integrated into the gate cover 74 including the gate profile 62, the secondary detent profile 88, the park detect switch 80, the tiptronic lock lever 78, and the tiptronic module 76. These features determine the shifter type, shifter precision and shifter feel. Because these feature are located on the same component, there is minimal assembly tolerance affecting there relative position. By changing the gate cover 74 alone, a shifter mechanism with different shifter lever travel or a different type of shifter mechanism can be obtained.

## Claims

1. A shifter mechanism (10) comprising, in combination:
a shifter lever assembly (14) including a housing (24);
a yoke assembly (26) having a shifter lever (52) and pivotably secured to the housing along a shift path; and
a gate cover (74) secured to the housing (24) and forming a slot (84);
wherein the shifter lever (52) extends through the slot (84) to define the shift path;
wherein the gate cover is a unitary component formed separate from the housing;
wherein the gate cover provides a gate profile (62) and a secondary detent profile (88); and
**characterized in that** there is provided,
a pawl (66) is movable into and out of engagement with the gate profile (62) to lock and unlock the shifter yoke (50) against pivotal movement relative to the housing (24);
a base (12) for attachment to a motor vehicle in a fixed position;
the housing (24) is secured to the base;
a knob (18) secured to the shifter lever for grasping by the driver to shift the shift lever assembly; and
a cover (20) secured to the housing for providing desired appearance and styling

2. The shifter mechanism according to claim 1, wherein said gate profile includes a plurality of downward facing grooves (86) selectively engaged by the pawl.

3. The shifter mechanism according to claim 1, wherein said secondary detent profile includes a plurality of downward facing grooves (88).

4. The shifter mechanism according to claim 1, wherein said gate cover has a park detect switch (80) secured thereto.

5. The shifter mechanism according to claim 1, wherein the shifter mechanism is adapted for an automatic transmission having manual override and said gate cover has a manual overrride module (76) secured thereto.

6. The shifter mechanism according to claim 5, wherein said gate cover has a lock lever (78) secured thereto for selectively preventing manual override.

7. The shifter mechanism according to claim 1, the shifter mechanism is adapted for an automatic transmission having manual override and wherein said gate cover has a lock lever (78) secured thereto for selectively preventing manual override.

8. The shifter mechanism according to claim 1, wherein the yoke assembly has a cable bracket (28) formed as a separate component from a yoke and secured to the yoke.

9. The shifter system according to claim 1, wherein the shifter mechanism is adapted for an automatic transmission having manual override.

## Patentansprüche

1. Schaltmechanismus (10), der kombiniert Folgendes umfasst:
eine Schalthebelbaugruppe (14), die ein Gehäuse (24) enthält;
eine Bügelbaugruppe (26), die einen Schalthebel (52) aufweist und schwenkbar an dem Gehäuse entlang eines Schaltwegs befestigt ist; und
eine Kulissenabdeckung (74), die an dem Gehäuse (24) befestigt ist und einen Schlitz (84) bildet;
wobei sich der Schalthebel (52) durch den Schlitz (84) erstreckt, um den Schaltweg zu definieren;
wobei die Kulissenabdeckung eine Einheitskomponente darstellt, die getrennt von dem Gehäuse ausgebildet wird;
wobei die Kulissenabdeckung ein Kulissenprofil (62) und ein sekundäres Einrastprofil (88) bereitstellt; und
**dadurch gekennzeichnet, dass** Folgendes vorgesehen ist:
eine Klinke (66) kann in Eingriff mit dem Kulissenprofil (62) und aus diesem heraus bewegt werden, um den Schaltbügel (50) gegen Schwenkbewegung in Bezug zu dem Gehäuse (24) zu verriegeln und entriegeln;
ein Boden (12) zur Befestigung an einem Kraftfahrzeug in einer festen Position;
das Gehäuse (24) wird an dem Boden befestigt;
ein Knopf (18), der an dem Schalthebel zum Ergreifen durch den Fahrer befestigt ist, um die Schalthebelbaugruppe zu verschieben; und
eine Abdeckung (20), die an dem Gehäuse zum Liefern der gewünschten Erscheinung und des gewünschten Stils befestigt wird.

2. Schaltmechanismus nach Anspruch 1, bei dem das Kulissenprofil eine Mehrzahl nach unten gerichteter Nuten (86) aufweist, in die die Klinke selektiv eingreift.

3. Schaltmechanismus nach Anspruch 1, bei dem das sekundäre Einrastprofil eine Mehrzahl nach unten gerichteter Nuten (88) aufweist.

4. Schaltmechanismus nach Anspruch 1, bei dem die Kulissenabdeckung einen daran befestigten Parken-Erkennungsschalter (80) aufweist.

5. Schaltmechanismus nach Anspruch 1, bei dem der Schaltmechanismus für ein Automatikgetriebe mit manuellem Eingriff angepasst ist, und die Kulissenabdeckung ein daran befestigtes manuelles Eingriffsmodul (76) aufweist.

6. Schaltmechanismus nach Anspruch 5, bei dem die Kulissenabdeckung einen daran befestigten Sperrhebel (78) zum selektiven Verhindern von manuellem Eingriff aufweist.

7. Schaltmechanismus nach Anspruch 1, wobei der Schaltmechanismus für ein Automatikgetriebe mit manuellem Eingriff angepasst ist, und wobei die Kulissenabdeckung einen daran befestigten Sperrhebel (78) zum selektiven Verhindern von manuellem Eingriff aufweist.

8. Schaltmechanismus nach Anspruch 1, bei dem die Bügelbaugruppe eine Kabelhalterung (28) aufweist, die als eine getrennte Komponente von einem Bügel ausgebildet und an dem Bügel befestigt ist.

9. Schaltsystem nach Anspruch 1, bei dem der Schaltmechanismus für ein Automatikgetriebe mit manuellem Eingriff angepasst ist.

## Revendications

1. Mécanisme sélecteur de vitesses (10) comportant, de manière combinée :
un ensemble levier sélecteur de vitesses (14) comprenant un carter (24) ;
un ensemble fourchette (26) ayant un levier sélecteur de vitesses (52) et assujetti de manière pivotante sur le carter le long d'une trajectoire de sélection de vitesse ; et
un capot de secteur (74) assujetti sur le carter (24) et formant une fente (84) ;
dans lequel le levier sélecteur de vitesses (52) s'étend au travers de la fente (84) pour définir la trajectoire de sélection de vitesse ;
dans lequel le capot de secteur est un composant d'un seul tenant formé séparément du carter ;
dans lequel le capot de secteur procure un profil de secteur (62) et un profil d'encliquetage secondaire (88) ; et
**caractérisé en ce que**, il est prévu :
un arrêtoir (66) est mobile à des fins de mise en prise et de mise hors prise avec le profil de secteur (62) pour bloquer et débloquer la fourchette de sélecteur de vitesses (50) contre tout mouvement pivotant par rapport au carter (24) ;
une base (12) à des fins de fixation sur un véhicule à moteur en une position fixe ;
le carter (24) est assujetti sur la base ;
un pommeau (18) est assujetti sur le levier sélecteur de vitesses à des fins de saisie par le conducteur pour changer de vitesse au niveau de l'ensemble levier sélecteur de vitesses ; et
un capot (20) est assujetti sur le carter pour la mise en oeuvre d'un aspect et d'un style tel qu'il est souhaité.

2. Mécanisme sélecteur de vitesses selon la revendication 1, dans lequel ledit profil de secteur comprend une pluralité de rainures faisant face vers le bas (86) mises en prise de manière sélective par l'arrêtoir.

3. Mécanisme sélecteur de vitesses selon la revendication 1, dans lequel ledit profil d'encliquetage secondaire comprend une pluralité de rainures faisant face vers le bas (88).

4. Mécanisme sélecteur de vitesses selon la revendication 1, dans lequel ledit capot de secteur a un commutateur de détection de stationnement (80) assujetti sur celui-ci.

5. Mécanisme sélecteur de vitesses selon la revendication 1, dans lequel le mécanisme sélecteur de vitesses est adapté pour une boîte de vitesses automatique ayant une commande manuelle de surpassement et ledit capot de secteur a un module de commande manuelle de surpassement (76) assujetti sur celui-ci.

6. Mécanisme sélecteur de vitesses selon la revendication 5, dans lequel ledit capot de secteur a un levier de verrouillage (78) assujetti sur celui-ci pour empêcher de manière sélective toute commande manuelle de surpassement.

7. Mécanisme sélecteur de vitesses selon la revendication 1, le mécanisme sélecteur de vitesses est adapté pour une boîte de vitesses automatique ayant une commande manuelle de surpassement et dans lequel ledit capot de secteur a un levier de verrouillage (78) assujetti sur celui-ci pour empêcher de manière sélective toute commande manuelle de surpassement.

8. Mécanisme sélecteur de vitesses selon la revendication 1, dans lequel l'ensemble fourchette a un support de câble (28) formé en tant que composant séparé d'une fourchette et assujetti sur la fourchette.

9. Système sélecteur de vitesses selon la revendication 1, dans lequel le mécanisme sélecteur de vitesses est adapté pour une boîte de vitesses automatique ayant une commande manuelle de surpassement.
